Europäisches Patentamt

**European Patent Office**

Office européen des brevets

(11) Veröffentlichungsnummer: **0 026 853**
**B1**

# EUROPÄISCHE PATENTSCHRIFT

(45) Veröffentlichungstag der Patentschrift:
30.11.83

(51) Int. Cl.³: **F 16 H 3/64**

(21) Anmeldenummer: 80105401.6

(22) Anmeldetag: 10.09.80

(54) **Planetenrad-Wechselgetriebe, insbesondere für Kraftfahrzeuge.**

(30) Priorität **29.09.79 DE 2939623**

(43) Veröffentlichungstag der Anmeldung:
**15.04.81 Patentblatt 81/15**

(45) Bekanntmachung des Hinweises auf die Patenterteilung:
**30.11.83 Patentblatt 83/48**

(84) Benannte Vertragsstaaten:
**FR GB IT SE**

(56) Entgegenhaltungen:
**CH - A - 519 665**
**DE - B - 1 153 583**
**DE - B - 1 213 689**
**DE - B - 1 218 244**
**FR - A - 1 326 058**
**GB - A - 594 950**
**GB - A - 598 806**
**GB - A - 704 428**
**GB - A - 729 408**
**GB - A - 793 616**
**GB - A - 977 582**
**US - A - 2 354 257**
**US - A - 3 234 821**

(73) Patentinhaber: **AUDI NSU AUTO UNION Aktiengesellschaft, Postfach 220 Ettingerstrasse, D-8070 Ingolstadt (DE)**

(72) Erfinder: **Höhn, Bernd-Robert, Dr. Ing., Mühlweg 10a, D-8073 Kösching (DE)**

## Planetenrad-Wechselgetriebe, insbesondere für Kraftfahrzeuge

Die Erfindung betrifft ein Planetenrad-Wechselgetriebe, insbesondere für Kraftfahrzeuge, gemäß dem Oberbegriff des Patentanspruchs 1.

Ein Planetenradgetriebe für Kraftfahrzeuge gemäß dem Gattungsbegriff des Patentanspruches 1 ist durch die DE-A-2 721 719 bekannt. Bei diesem sind der Steg des ersten Planetensatzes mit dem äußeren Zentralrad des zweiten Planetensatzes, der Steg des zweiten Planetensatzes mit dem äußeren Zentralrad des dritten Planetensatzes und die Sonnenräder des zweiten und dritten Planetensatzes miteinander gekoppelt. Unter Verwendung von zwei Schaltkupplungen und drei Schaltbremsen können mit diesem Planetenradgetriebe sechs Vorwärtsgänge und ein Rückwärtsgang realisiert werden.

Aufgrund der gewählten Kopplungen sind die beiden Schaltkupplungen den drei Planetensätzen vorgelagert, wodurch das Planetenradgetriebe relativ lang baut. Zur Verbindung der Schaltkupplungen mit den korrespondierenden Gliedern der Planetensätze sind drei koaxial ineinander gelagerte Hohlwellen erforderlich, die einerseits die Zuführung von Druckmittel zu den Schaltkupplungen komplizieren und andererseits — da das Sonnenrad des ersten Planetensatzes auf der äußersten Hohlwelle angeordnet ist und deshalb einen entsprechend großen Durchmesser aufweisen muß — zumindest beim ersten Planetensatz einen relativ großen Durchmesser bewirken, woraus gegebenenfalls ungünstige Übersetzungsverhältnisse und Gangabstufungen resultieren können und auch ein radial großer Bauraum erforderlich ist.

Aufgabe der Erfindung ist es, das gattungsgemäße Planetenrad-Wechselgetriebe derart auszubilden, daß es bei einem relativ einfachen Aufbau wenig Bauraum erfordert und daß mit zwei Schaltkupplungen und drei Schaltbremsen bis zu sieben Vorwärtsgänge und ein Rückwärtsgang bei günstigen Übersetzungsverhältnissen und Gangabstufungen erzielbar sind.

Diese Aufgabe wird erfindungsgemäß mit den kennzeichnenden Merkmalen des Patentanspruches 1 gelöst.

Obwohl die ungekoppelten Glieder der Planetensätze theoretisch auch die äußeren Zentralräder oder die Stege sein können, werden nach einer bevorzugten Ausführung der Erfindung die Sonnenräder vorgeschlagen, wodurch ein besonders einfacher und kompakter Aufbau des Planetenradgetriebes erzielt wird.

Weitere vorteilhafte Merkmale der Erfindung sind den Patentansprüchen 3 bis 9 und der nachfolgenden Beschreibung eines Ausführungsbeispieles entnehmbar.

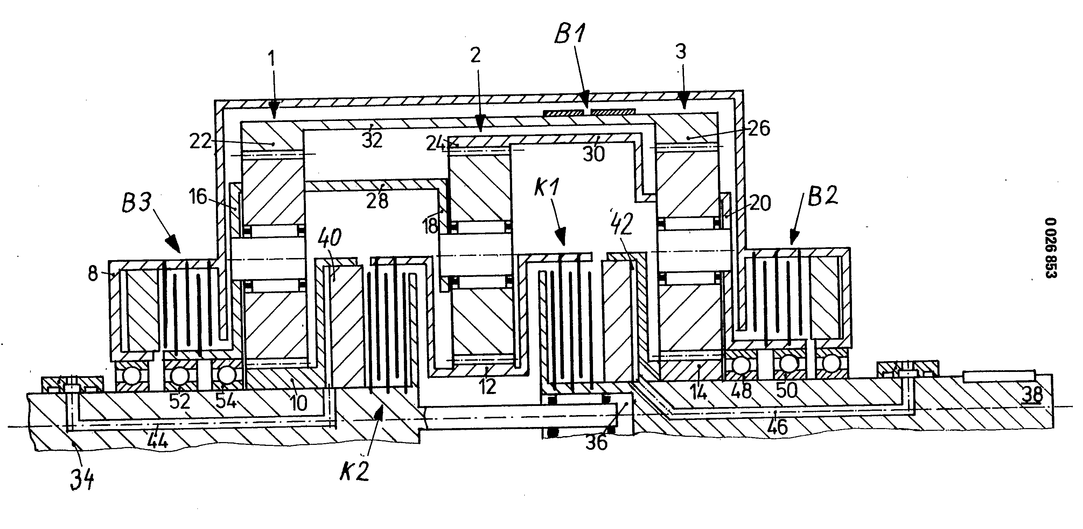

Die Zeichnung zeigt eine schematische Darstellung eines erfindungsgemäßen Planetenradgetriebes.

In einem Getriebegehäuse 8 eines nur zu einer Hälfte dargestellten Planetenrad-Wechselgetriebes sind drei einfache Planetensätze 1, 2 und 3 koaxial hintereinander angeordnet. Die Planetensätze 1, 2 3 setzen sich in bekannter Weise aus je einem Sonnenrad 10, 12, 14, aus Planetenrädern bzw. diese tragende Stege 16, 18, 20 und aus je einem äußeren Zentralrad 22, 24, 26 zusammen. Es versteht sich, daß die Zahnräder der einzelnen Planetensätze zur Erzielung der gewünschten Gangabstufungen und Über- bzw. Untersetzungen mit unterschiedlichen Zähnezahlen versehen sind.

Ein jeder Planetensatz ist mit jedem anderen Planetensatz mit einer festen Kopplung verbunden. So ist der Steg 16 des Planetensatzes 1 mittels einer Koppelwelle 28 mit dem Steg 18 des Planetensatzes 2, das äußere Zentralrad 24 des Planetensatzes 2 über eine Koppelwelle 30 mit dem Steg 20 des Planetensatzes 3 und schließlich die äußeren Zentralräder 22, 26 der Planetensätze 1 und 3 mit einer Koppelwelle 32 verbunden.

An einer jeden Koppelwelle 28, 30, 32 ist eine Schaltbremse B1, B2, B3 angeordnet, die in bekannter, nicht näher dargestellter Weise hydraulisch betätigt werden und die Koppelwellen 28, 30, 32 wahlweise im Getriebegehäuse 8 festbremsen.

Die ungekoppelten Glieder der Planetensätze 1, 2, 3 sind von gleicher Art, d. h. jeweils das Sonnenrad 10, 12, 14 der Planetensätze 1, 2, 3. Das Sonnenrad 10 des Planetensatzes 1 ist mit einer Antriebswelle 34 beispielsweise mittels einer Kerbverzahnung fest verbunden. Die Antriebswelle 34 erstreckt sich ferner durch das Sonnenrad 12 des Planetensatzes 2 frei hindurch und ist in einer zentrischen, stirnseitigen Bohrung 36 einer Abtriebswelle 38 frei drehbar gelagert.

Die Abtriebswelle 38 ist mit dem Sonnenrad 14 des Planetensatzes 3 fest verbunden, beispielsweise einstückig ausgebildet. Zwischen den Sonnenrädern 10, 12 bzw. 12, 14 ist jeweils eine Schaltkupplung K1, K2 angeordnet, mit denen das Sonnenrad 12 wahlweise mit der Antriebswelle 34, der Abtriebswelle 38 oder mit beiden kuppelbar ist.

Auf der Antriebs- bzw. Abtriebswelle 34, 38 ist je ein Servomotor 40, 42 angeordnet, welche die als Lamellenkupplungen ausgebildeten Schaltkupplungen K1, K2 betätigen, wobei die Druckmittelzufuhr zur Schaltkupplung K1 im wesentlichen durch eine Axialbohrung 44 der Antriebswelle 34 und zur Schaltkupplung K2 durch eine Axialbohrung 46 der Abtriebswelle 38 erfolgt. Die Schaltkupplungen K1, K2 sind im Durchmesser mit den Koppelwellen derart abgestimmt, daß sie innerhalb der Koppelwellen 28 bzw. 30 Platz finden, wodurch ein sehr kompakter, wenig Bauraum erforderlicher Getriebeaufbau erzielt wird.

Der mittlere Planetensatz 2 bzw. dessen äußeres Zentralrad 24 ist über die Koppelwelle 30 und den Steg 20 im Getriebegehäuse 8 gelagert und geführt. Es versteht sich, daß die Koppelwelle 30 und der Steg 20, welcher über Wälzlager 48, 50 auf der Abtriebswelle 38 und im Getriebegehäuse 8 drehbar gelagert ist, dieser Funktion entsprechend ausgelegt werden müssen. Zusätzlich ist der Steg 18 über die Koppelwelle 28 drehbar abgestützt, wobei der mit der Koppelwelle 28 verbundene Steg 16 mittels Wälzlager 52, 54 auf der Antriebswelle 34 und ebenfalls im Getriebegehäuse 8 drehbar gelagert ist. Demgegenüber ist das Sonnenrad 12 zur Erzielung eines Lastausgleiches beim Planetensatz 2 ungelagert bzw. zu den korrespondierenden Planetenrädern radial frei einstellbar. Der Lastausgleich bei den Planetensätzen 1 und 3 wird erreicht, indem sich deren äußere Zentralräder 22, 26 ungelagert auf den korrespondierenden Planetenrädern abstützen bzw. zentrieren.

Mit dem beschriebenen Planetenrad-Wechselgetriebe sind bis zu sieben Vorwärts- und ein Rückwärtsgang verwirklichbar, wobei für jede Gangstufe zwei Schaltelemente (Schaltbremse, -kupplung) entsprechend der folgenden Tabelle wirksam sind. Die Kennzeichnung X bedeutet das Einrücken einer Schaltkupplung bzw. das Anlegen einer Schaltbremse.

Brems- und Kupplungsbetätigung in den einzelnen Gängen:

|  | B 1 | B 2 | B 3 | K 1 | K 2 |
|---|---|---|---|---|---|
| 1. Gang |  | X |  |  | X |
| 2. Gang | X |  |  |  | X |
| 3. Gang |  |  | X | X |  |
| 4. Gang |  | X |  | X |  |
| 5. Gang | X |  |  | X |  |
| 6. Gang |  | X | X |  |  |
| 7. Gang |  |  |  | X | X |
| Rückwärtsgang |  |  | X |  | X |

Wie der schematischen Zeichnung entnehmbar ist, weist das erfindungsgemäße Planetenrad-Wechselgetriebe einen relativ einfachen, wenig Bauraum erfordernden Aufbau auf. Da im Bereich der Planetensätze keine der Antriebs- bzw. Abtriebswelle unmittelbar benachbarten Hohlwellen vorhanden sind, können eine unkomplizierte Druckmittelzufuhr zu den Schaltkupplungen und radial klein bauende Planetensätze bei günstigen Übersetzungsverhältnissen und Gangabstufungen werden. Die Schaltkupplungen sind zwischen den Planetensätzen angeordnet, wodurch auch axialer Bauraum eingespart wird.

Obwohl die Erfindung anhand eines bevorzugten Ausführungsbeispieles beschrieben wurde, sind auch andere Ausführungsvarianten denkbar, welche unter Berücksichtigung konstruktiver Vorgaben vorteilhaft sein können. Beispielsweise kann die Koppelung zwischen den Planetensätzen 1 und 2 auf die Planetensätze 2 und 3 und umgekehrt angewendet werden. Es ist im Rahmen der Erfindung auch möglich, anstelle der Sonnenräder die äußeren Zentralräder ungekoppelt auszubilden, wobei dann die äußeren Zentralräder wie im Ausführungsbeispiel die Sonnenräder mit dem An- und Abtrieb zu verbinden und zu kuppeln wären, während umgekehrt die Sonnenräder wie im Ausführungsbeispiel die äußeren Zentralräder zu koppeln wären.

**Patentansprüche**

1. Planeten-Wechselgetriebe, insbesondere für Kraftfahrzeuge, mit drei zwischen einer Antriebs- und einer Abtriebswelle angeordneten einfachen Planetensätzen, die untereinander mit festen Kopplungen verbunden sind, und mit mehreren wahlweise betätigbaren Schaltkupplungen und Schaltbremsen zum Schalten mehrerer Gänge, gekennzeichnet durch die folgenden Merkmale:

a) jeder Planetensatz (1, 2, 3) ist mit jedem anderen Planetensatz mit nur einer festen Kopplung (Koppelwellen 28, 30, 32) verbunden,

b) einer jeden Kopplung ist eine Schaltbremse (B1, B2, B3) zugeordnet,

c) die verbleibenden, ungekoppelten Glieder der Planetensätze sind von gleicher Art und

d) ein ungekoppeltes Glied (10) ist mit der Antriebswelle (34) und ein zweites (14) mit der Abtriebswelle (38) fest verbunden, während das dritte ungekoppelte Glied (12) mittels zweier Schaltkupplungen (K1, K2) mit einem oder beiden der vorgenannten Glieder verbindbar ist.

2. Planetenrad-Wechselgetriebe nach Anspruch 1, dadurch gekennzeichnet, daß die ungekoppelten Glieder der Planetensätze die Sonnenräder (10, 12, 14) sind.

3. Planetenrad-Wechselgetriebe nach den Ansprüchen 1 und 2, gekennzeichnet durch die folgenden Merkmale:

a) der Steg (bzw. Planetenradträger) des ersten Planetensatzes (1) ist mit dem Steg des zweiten (mittleren) Planetensatzes (2) über eine Koppelwelle (28) verbunden,

b) das äußere Zentralrad (22) des ersten Planetensatzes (1) ist mit dem äußeren Zentralrad (26) des dritten Planetensatzes (3) über eine Koppelwelle (32) verbunden,

c) das äußere Zentralrad (24) des zweiten Planetensatzes (2) ist mit dem Steg (20) des dritten Planetensatzes (3) über eine Koppelwelle (30) verbunden.

4. Planetenrad-Wechselgetriebe nach den Ansprüchen 1 und 3, gekennzeichnet durch die folgenden Merkmale:

a) zwischen dem ersten und zweiten Planetensatz und zwischen dem zweiten und dritten Planetensatz ist je eine Schaltkupplung (K1, K2) angeordnet,
b) die Schaltkupplungen sind innerhalb der die Koppelung zwischen den Planetensätzen bewirkenden, als Hohlwellen ausgebildeten Koppelwellen (28, 30) angeordnet.

5. Planetenrad-Wechselgetriebe nach den Ansprüchen 1 bis 4, mit hydraulisch betätigbaren Schaltkupplungen, dadurch gekennzeichnet, daß die eine Schaltkupplung (K1) durch eine Axialbohrung (44) in der Antriebswelle (34) und die zweite Schaltkupplung (K2) über eine Axialbohrung (46) in der Abtriebswelle (38) mit Druckmittel beaufschlagt ist.

6. Planetenrad-Wechselgetriebe nach den Ansprüchen 2 bis 5, dadurch gekennzeichnet, daß sich die Antriebswelle (34) durch das Sonnenrad (12) des zweiten Planetensatzes (2) hindurch erstreckt und innerhalb der Abtriebswelle (38) frei drehbar gelagert ist.

7. Planetenrad-Wechselgetriebe nach einem oder mehreren der vorhergehenden Ansprüche, dadurch gekennzeichnet, daß das äußere Zentralrad (24) des zweiten Planetensatzes (2) über die Koppelwelle (30) und den Steg (20) des dritten Planetensatzes (3) gelagert und abgestützt ist.

8. Planetenrad-Wechselgetriebe nach einem oder mehreren der vorhergehenden Ansprüche, dadurch gekennzeichnet, daß das Sonnenrad (12) des zweiten Planetensatzes (2) frei einstellbar zu den korrespondierenden Planetenrädern angeordnet ist.

9. Planetenrad-Wechselgetriebe nach einem oder mehreren der vorhergehenden Ansprüche, dadurch gekennzeichnet, daß die äußeren Zentralräder (22 bzw. 26) des ersten und dritten Planetensatzes (1 bzw. 3) frei einstellbar zu den korrespondierenden Planetenrädern angeordnet sind.

## Claims

1. An epicyclic change-speed gear, particularly for motor vehicles, having three simple sets of planets disposed between a drive shaft and a driven shaft and connected to one another by fixed couplings, and having a plurality of cluthes and gear-shift brakes which can be actuated selectively to change a plurality of gears, characterised by the following features:

a) each set of planets (1, 2, 3) is connected to each other set of planets by only one fixed coupling (coupling shafts 28, 30, 32),
b) a gear-shift brake (B1, B2, B3) is associated with each coupling,
c) the remaining, uncoupled members of the sets of planets are of the same kind and
d) one uncoupled member (10) is rigidly connected to the drive shaft (34) and a second one (14) is rigidly connected to the driven shaft (38), while the third uncoupled member (12) can be connected to one or both of the above-mentioned members by means of two clutches (K1, K2).

2. An epicyclic change-speed gear as claimed in Claim 1, characterised in that the uncoupled members of the sets of planets are the sun wheels (10, 12, 14).

3. An epicyclic change-speed gear as claimed in Claims 1 and 2, characterised by the following features:

a) the web (or satellite carrier) of the first set of planets (1) is connected to the web of the second (middle) set of planets (2) via a coupling shaft (28),
b) the outer central wheel (22) of the first set of planets (1) is connected to the outer central wheel (26) of the third set of planets (3) via a coupling shaft (32),
c) the outer central wheel (24) of the second set of planets (2) is connected to the web (20) of the third set of planets (3) via a coupling shaft (30).

4. An epicyclic change-speed gear as claimed in Claims 1 and 3, characterised by the following features:

a) a clutch (K1, K2) is disposed in each case between the first and second set of planets and between the second and third set of planets,
b) the clutches are disposed inside the coupling shafts (28, 30) effecting the coupling between the sets of planets and constructed in the form of hollow shafts.

5. An epicyclic change-speed gear as claimed in Claims 1 to 4, with hydraulically actuated clutches, characterised in that the one clutch (K1) is acted upon by pressure fluid through an axial bore (44) in the drive shaft (34) and the second clutch (K2) is acted upon by pressure fluid through an axial bore (46) in the driven shaft (38).

6. An epicyclic change-speed gear as claimed in Claims 2 to 5, characterised in that the drive shaft (34) extends through the sun wheel (12) of the second set of planets (2) and is mounted for free rotation inside the driven shaft (38).

7. An epicyclic change-speed gear as claimed in one or more of the preceding Claims, characterised in that the outer central wheel (24) of the second set of planets (2) is mounted and supported via the coupling shaft (30) and the web (20) of the third set of planets (3).

8. An epicyclic change-speed gear as claimed in one or more of the preceding Claims, characterised in that the sun wheel (12) of the second set of planets (2) is adapted for free adjustment in relation to the corresponding planet wheels.

9. An epicyclic change-speed gear as claimed in one or more of the preceding Claims, characterised in that the outer central wheels (22 or 26) of the first and third sets of planets (1 and 3) are adapted for free adjustment in relation to the corresponding planet wheels.

**Revendications**

1. Boîte de vitesses à train épicycloïdal, en particulier pour véhicules automobiles, comportant trois jeux planétaires simples qui sont disposés entre un arbre moteur et un arbre de sortie et qui sont reliés entre eux par des couplages rigides, ainsi que plusieurs accouplements de changement de vitesse et freins de changement de vitesse manoeuvrables sélectivement pour le passage de plusieurs vitesses, caractérisée en ce que chaque jeu planétaire (1, 2, 3) est relié à chaque autre jeu planétaire par un seul couplage rigide (arbres de couplage 28, 30, 32), en ce qu'un frein de changement de vitesse (B1, B2, B3) est adjoint à chaque couplage, en ce que les éléments restants, non couplés des jeux planétaires sont du même genre, et en ce qu'un élément non couplé (10) est solidaire de l'arbre moteur (34) et un second (14) est solidaire de l'arbre de sortie (38), tandis que le troisième élément non couplé (12) peut être relié à l'un ou à l'un et l'autre des éléments précités au moyen de deux accouplements de changement de vitesse (K1, K2).

2. Boîte de vitesses à train épicycloïdal selon la revendication 1, caractérisée en ce que les éléments non couplés des jeux planétaires sont les roues solaires (10, 12, 14).

3. Boîte de vitesses à train épicycloïdal selon la revendication 1 ou 2, caractérisée en ce que la barrette (ou porte-satellite) du premier jeu planétaire (1) est reliée à la barrette du second jeu planétaire (2) (du milieu) au moyen d'un arbre de couplage (28), en ce que le planétaire extérieur (22) du premier jeu planétaire (1) est relié au planétaire extérieur (26) du troisième jeu planétaire (3) au moyen d'un arbre de couplage (32) et en ce que le planétaire extérieur (24) du second jeu planétaire (2) est relié à la barrette (20) du troisième jeu planétaire (3) au moyen d'un arbre de couplage (30).

4. Boîte de vitesses à train épicycloïdal selon la revendication 1 ou 3, caractérisée en ce qu'il est intercalé chaque fois un accouplement de changement de vitesse (K1, K2) entre le premier et le second jeux planétaires et entre le second et le troisième jeux planétaires et en ce que les accouplements de changement de vitesse sont disposés à l'intérieur des arbres de couplage (28, 30) réalisés sous forme d'arbres creux qui constituent le couplage entre les jeux planétaires.

5. Boîte de vitesses à train épicycloïdal selon l'une quelconque des revendications 1 à 4, équipée d'accouplements de changement de vitesse actionnés hydrauliquement, caractérisée en ce que l'un des accouplements de changement de vitesse (K1) est alimenté en fluide hydraulique par une forure axiale (44) dans l'arbre moteur (34) et le second accouplement de changement de vitesse (K2) par une forure axiale (46) dans l'arbre de sortie (38).

6. Boîte de vitesses à train épicycloïdal selon l'une quelconque des revendications 2 à 5, caractérisée en ce que l'arbre moteur (34) s'étend à travers la roue solaire (12) du second jeu planétaire (2) et est monté à rotation libre à l'intérieur de l'arbre de sortie (38).

7. Boîte de vitesses à train épicycloïdal selon l'une quelconque des revendications 1 à 6, caractérisée en ce que le planétaire extérieur (24) du second jeu planétaire (2) est monté et soutenu au moyen de l'arbre de couplage (30) et de la barrette (20) du troisième jeu planétaire (3).

8. Boîte de vitesses à train épicycloïdal selon l'une quelconque des revendications 1 à 7, caractérisée en ce que la roue solaire (12) du second jeu planétaire (2) est montée réglable librement par rapport aux satellites correspondants.

9. Boîte de vitesses à train épicycloïdal selon l'une quelconque des revendications 1 à 8, caractérisée en ce que les planétaires extérieurs (22, 26) du premier et du troisième jeux planétaires (1, 3) sont montés réglables librement par rapport aux satellites correspondants.

B1

1    2    3

22    32    24    30    26

16    28    18    20

B3    40    K1    42    B2

8

52    54    10    12    14    48    50    38

44    K2    36    46

34

0 026 853